# EUROPEAN PATENT APPLICATION

(11) **EP 4 588 760 A1**
(43) Date of publication of application: **23.07.2025**
(21) Application number: 25150402.3
(22) Date of filing: 07.01.2025
(51) Int. Cl.: B62D 21/15, B62D 25/02, B62D 25/20, B60K 1/04

(54) **VEHICLE LOWER BODY STRUCTURE AND VEHICLE**

(30) Priority: 18.01.2024 JP 2024005808
(71) Applicant: MAZDA MOTOR CORPORATION, Hiroshima 730-8670 (JP)
(72) Inventor: CHIKITA, Masaru, Aki-gun, Hiroshima, 730-8670 (JP); NOZURU, Kotomi, Aki-gun, Hiroshima, 730-8670 (JP)
(74) Representative: Müller-Boré & Partner Patentanwälte PartG mbB

(57) **Abstract**

The technique disclosed herein includes: an outer reinforcement 30 fixed to an outer wall portion 13 of a side sill 2 and overlaps an area where a battery B is disposed in a vehicle front-rear direction; and an inner reinforcement 40 fixed to an inner wall portion 23 of a side sill 3 and overlaps a cross member 60 in the vehicle front-rear direction. The outer reinforcement 30 includes an overlapping portion that overlaps the inner reinforcement 40 in an up-down direction, and the inner reinforcement 40 includes: a horizontal surface portion 41a extending in the vehicle front-rear direction and a vehicle width direction; and a vertical surface portion 43 fixed to the horizontal surface portion 41a, an inner upper wall portion 21, and the inner wall portion 23 and extending in the up-down direction and the vehicle width direction.

## Description

### [Technical Field]

The invention relates to a lower body structure of a vehicle.

### [Background Art]

In the case of a hybrid vehicle or an electric vehicle, a battery may be disposed below a floor panel. In such a vehicle, a body structure for absorbing collision energy so that a collision load during a side collision is not transmitted to the battery has been studied.

Patent Literature 1 discloses a side sill component including: a first profile component that is located on a relatively outer side in a vehicle width direction and has first breakability; and a second profile component that is located on a relatively inner side in the vehicle width direction and has second breakability lower than the first breakability. In Patent Literature 1, a first profile member and a second profile member are crushed during the side collision so as to absorb the collision energy.

### [Citation List]

### [Patent Literature]

[Patent Literature 1] JP2022-531463A

### [Summary of Invention]

### [Technical Problem]

However, in the configuration of Patent Literature 1, there is a possibility that the collision load that cannot be sufficiently absorbed by crushing of the first profile member is transmitted to the battery via the second profile member without crushing the second profile member. Therefore, there is room for improvement from a viewpoint of preventing the transmission of the collision load to the battery.

A technique disclosed herein has been made in view of the above point, and an object thereof is to prevent a collision load during a side collision from being transmitted to a battery.

### [Solution to Problem]

The above problem is solved by the invention as defined in claim 1. Particularly, a first aspect of the technique disclosed herein may be directed to a vehicle lower body structure that includes: a pair of left and right side sills, each of which has a closed cross-sectional structure extending in a vehicle front-rear direction; a floor panel that is fixed to the side sill and constitutes a floor surface of a cabin; a battery that is disposed below the floor panel and supported by the side sill; a cross member that extends in a vehicle width direction, and each end portion in the vehicle width direction of which is fixed to the side sill at a position above the floor panel; an outer reinforcement that is fixed to an outer wall portion as an outer wall surface of the side sill in the vehicle width direction, and/or cooperates with the side sill to form a closed cross section, and/or overlaps an area where the battery is disposed in the vehicle front-rear direction, in the closed cross-sectional structure of the side sill; and an inner reinforcement that is fixed to an inner wall portion as an inner wall surface of the side sill in the vehicle width direction and/or overlaps the cross member, in the vehicle front-rear direction in the closed cross-sectional structure of the side sill. The outer reinforcement includes an overlapping portion that is located on an inner side of another portion of the outer reinforcement in the vehicle width direction and overlaps the inner reinforcement in an up-down direction. The inner reinforcement includes: a first inner reinforcement that has a horizontal surface portion extending in the vehicle front-rear direction and the vehicle width direction, and an inner end portion of which in the vehicle width direction is fixed to the inner wall portion; and a second inner reinforcement that has a vertical surface portion fixed to the horizontal surface portion, an upper wall portion of the side sill, and the inner wall portion and extending in the up-down direction and the vehicle width direction.

In the first aspect, when the outer wall portion is displaced inward in the vehicle width direction by a side collision, the overlapping portion of the outer reinforcement abuts the inner reinforcement. Since the inner reinforcement includes the vertical surface portion fixed to the upper wall portion and the inner wall portion of the side sill, a load transmitted from the outer reinforcement to the inner reinforcement is transmitted inward in the vehicle width direction and upward via the vertical surface portion. Since the floor panel and the cross member are fixed to the inner portion of the side sill in the vehicle width direction at the position above the battery, a collision load is transmitted from the inner reinforcement to the floor panel and the cross member. As it has been described so far, the transmission of the collision load to the battery disposed below the floor panel is prevented.

According to a second aspect, in the first aspect, a center of the inner reinforcement in the up-down direction may be located above a center of the overlapping portion in the up-down direction.

In the second aspect, even in the case where the inner reinforcement is rotationally displaced by the collision load when the overlapping portion of the outer reinforcement abuts the inner reinforcement, the inner reinforcement is rotationally displaced inward in the vehicle width direction and upward. Therefore, a transmission path of the collision load from the outer reinforcement to the floor panel and the cross member is easily maintained. Accordingly, it is possible to prevent the collision load from being transmitted to the battery during the side collision.

According to a third aspect, in the first or second aspect, the overlapping portion may have a surface extending in the vehicle front-rear direction and the up-down direction and/or overlaps the vertical surface portion in the vehicle front-rear direction or in the side-view of the vehicle.

In the third aspect, the overlapping portion easily abuts the vertical surface portion. In addition, since the overlapping portion comes into contact with the vertical surface portion in the widest possible range, the collision load can be distributed and applied to the vertical surface portion. Accordingly, the collision load is efficiently transmitted from the outer reinforcement to the floor panel and the cross member. As a result, it is possible to prevent the collision load during the side collision from being transmitted to the battery.

According to a fourth aspect, in any one of the first to third aspects, the vertical surface portion may overlap the cross member in the vehicle front-rear direction or in the side-view of the vehicle.

In the fourth aspect, the collision load is efficiently transmitted to the cross member via the vertical surface portion. Accordingly, it is possible to prevent the collision load from being transmitted to the battery during the side collision.

According to a fifth aspect, in any one of the first to fourth aspects, the second inner reinforcement may have a lateral surface portion extending in the vehicle front-rear direction and the up-down direction from an outer end portion of the vertical surface portion in the vehicle width direction, and the lateral surface portion may overlap the overlapping portion in the up-down direction or in the side-view of the vehicle.

In the fifth aspect, the collision load is transmitted from the overlapping portion to the vertical surface portion via the lateral surface portion. The collision load is transmitted from the vertical surface portion to the floor panel and the cross member. Accordingly, it is possible to prevent the collision load from being transmitted to the battery during the side collision.

According to a sixth aspect, in any one of the first to fifth aspects, the vertical surface portion may have a bead that is inclined upward to an inner side in the vehicle width direction from an outer side in the vehicle width direction.

In the sixth aspect, the collision load is efficiently transmitted inward in the vehicle width direction and upward by the bead. In this way, since the collision load is transmitted to the floor panel and the cross member, it is possible to prevent the collision load during the side collision from being transmitted to the battery.

According to a seventh aspect, in one of the first to sixth aspects, the overlapping portion may be a surface portion extending in the up-down direction, and the outer reinforcement may further include: an upper surface portion extending outward in the vehicle width direction toward the outer wall portion from an upper end of the overlapping portion; and a lower surface portion extending outward in the vehicle width direction toward the outer wall portion from a lower end of the overlapping portion.

In the seventh aspect, the closed cross section formed of the outer wall portion and the outer reinforcement can be made as large as possible, and rigidity of the outer reinforcement is improved. Accordingly, the collision load can be efficiently transmitted from the outer reinforcement to the vertical surface portion, and the collision load during the side collision can be prevented from being transmitted to the battery.

According to an eighth aspect, in the seventh aspect, the overlapping portion may overlap the vertical surface portion in the vehicle front-rear direction or in the side-view of the vehicle, and the upper surface portion may be located at the same position as the floor panel in the up-down direction.

In the eighth aspect, the collision load is efficiently transmitted from the upper surface portion to the floor panel via the vertical surface portion. Accordingly, it is possible to prevent the collision load from being transmitted to the battery during the side collision.

According to a ninth aspect, in the seventh or eighth aspect, the outer reinforcement may further include: an upper flange extending upward from an outer end portion of the upper surface portion in the vehicle width direction and fixed to the outer wall portion; and a lower flange extending downward from an outer end portion of the lower surface portion in the vehicle width direction and fixed to the outer wall portion, the lower surface portion may be inclined downward to the outer side in the vehicle width direction, a corner portion between the lower surface portion and the lower flange may have a deformation promoting portion, and a corner portion between the upper surface portion and the upper flange may not have a deformation promoting portion.

In the ninth aspect, the lower surface portion is more easily displaced than the upper surface portion by the deformation promoting portion. Since the lower surface portion is inclined downward to the outer side in the vehicle width direction, the lower surface portion is displaced upward during the side collision. Therefore, during the side collision, the outer reinforcement is deformed such that the overlapping portion is displaced upward. In this way, the collision load is transmitted from the outer reinforcement to an upper portion of the inner reinforcement. Thus, the collision load is efficiently transmitted from the inner reinforcement to the floor panel and the cross member. As a result, it is possible to prevent the collision load during the side collision from being transmitted to the battery.

According to a tenth aspect, in any one of the first to ninth aspect, material strength of the outer reinforcement may be lower than that of the cross member, and/or material strength of the second inner reinforcement may be lower than that of the outer reinforcement.

In the tenth aspect, when the collision load is relatively large, the collision load can be absorbed by crushing of the second inner reinforcement. Even in the case where the second inner reinforcement is crushed, the collision load can be transmitted to the floor panel and the cross member as long as the second inner reinforcement is fixed to the upper wall portion and the inner wall portion of the side sill. Therefore, even when the collision load is relatively large, it is possible to prevent the collision load during the side collision from being transmitted to the battery.

### [Advantage Effects of Invention]

As it has been described so far, according to the invention, it is possible to prevent the collision load during the side collision from being transmitted to the battery.

### [Brief Description of Drawings]

[FIG. 1] FIG. 1 is a plan view illustrating a body of a vehicle including a lower body structure according to an exemplary embodiment.
[FIG. 2] FIG. 2 is a cross-sectional view taken along a plane corresponding to line II-II in FIG. 1.
[FIG. 3] FIG. 3 is a cross-sectional view taken along a plane corresponding to line III-III in FIG. 2.
[FIG. 4] FIG. 4 is a cross-sectional view taken along a plane corresponding to line IV-IV in FIG. 3.
[FIG. 5] FIG. 5 is a perspective view of a first inner reinforcement.
[FIG. 6] FIG. 6 is a perspective view of a second inner reinforcement.
[FIG. 7] FIG. 7 is a perspective view illustrating a joint portion between the second inner reinforcement and an inner panel.
[FIG. 8] FIG. 8 is a perspective view illustrating a joint portion between the first inner reinforcement and the second inner reinforcement.
[FIG. 9] FIG. 9 is a cross-sectional view taken along a plane corresponding to line IX-IX in FIG. 3.
[FIG. 10] FIG. 10 is a cross-sectional view illustrating a state where a collision body abuts a side sill during a side collision.
[FIG. 11] FIG. 11 is a cross-sectional view illustrating a state where the collision body enters vehicle interior from the state in FIG. 10.
[FIG. 12] FIG. 12 is a cross-sectional view illustrating a state where the collision body further enters the vehicle interior from the state in FIG. 11 and the second inner reinforcement is crushed.

### [Description of Embodiments]

Exemplary embodiments will now be described in detail with reference to the drawings. In the following description, the front, rear, left, right, up, and down of a vehicle 1 are simply referred to as the front, rear, left, right, up, and down, respectively. A left-right direction corresponds to a vehicle width direction.

### (Overall Configuration of Lower Body)

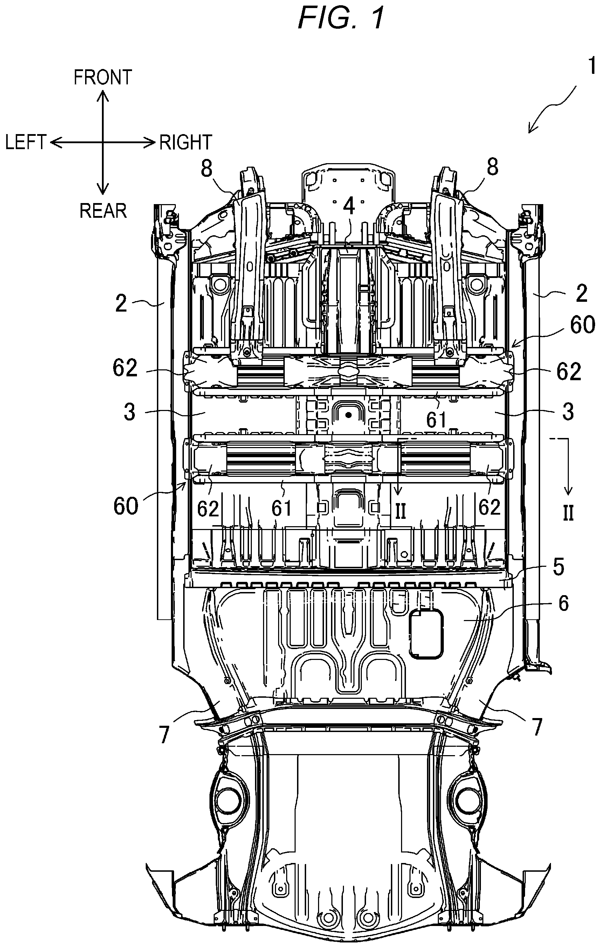

FIG. 1 illustrates a lower body of the vehicle 1 to which a body structure according to the present embodiment is applied. The vehicle 1 may be a four-door type passenger vehicle. In the present embodiment, the body structure of the vehicle 1 is configured to be bilaterally symmetrical.

The vehicle 1 includes a pair of left and right side sills 2. Each of the side sills 2 extends straight or substantially straight in a front-rear direction. As will be described in detail below, each of the side sills 2 has a closed cross-sectional structure, and the closed cross section extends straight or substantially straight in the front-rear direction.

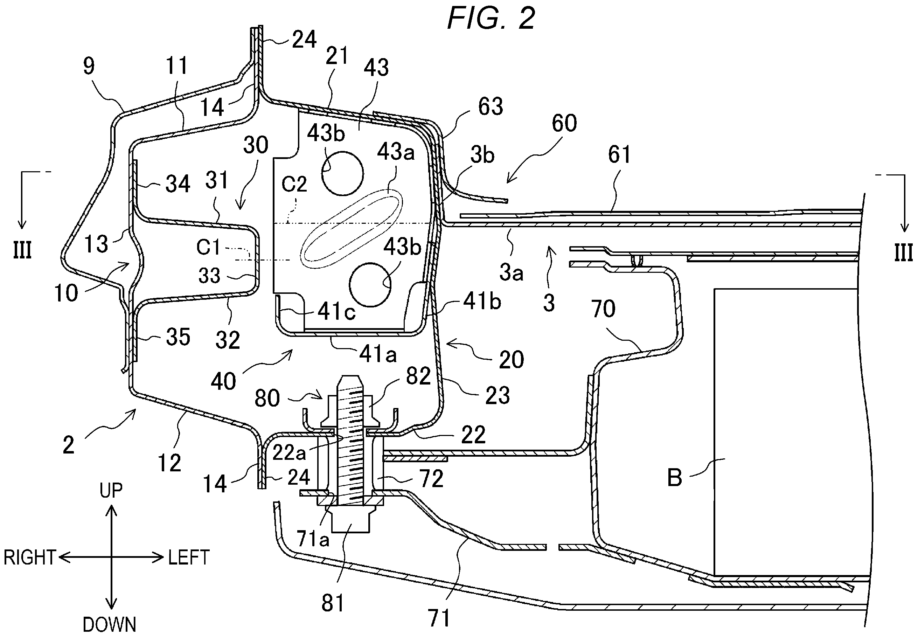

The vehicle 1 includes a floor panel 3 that constitutes a floor surface of a cabin. A pair of the left and right floor panels 3 may be provided. Each of the floor panels 3 has: a floor panel main body 3a (see FIG. 2 and the like) extending in the vehicle width direction and the front-rear direction; and a floor panel joint portion 3b (see FIG. 2 and the like) fixed to the respective side sill 2 e.g., by welding.

The floor panel joint portion 3b of the left floor panel 3 is provided in a left end portion, and is fixed to a right portion of the left side sill 2 e.g., by welding. The floor panel joint portion 3b of the right floor panel 3 is provided in a right end portion, and is fixed to a left portion of the right side sill 2 e.g., by welding. A right end portion of the left floor panel 3 and a left end portion of the right floor panel 3 may be coupled by a tunnel panel 4.

At a rear end of the floor panel 3, a kick-up portion 5 that rises upward may be disposed. A rear floor panel 6 extends rearward from the kick-up portion 5. The rear floor panel 6 mainly constitutes a floor surface of a baggage compartment. A pair of left and right rear wheel houses 7 is respectively arranged on both left and right sides of the rear floor panel 6.

One or more, particularly two cross members 60 extending along the left-right direction may be disposed on an upper side of the floor panel 3. The two cross members 60 are aligned in the front-rear direction. A position of the rear cross member 60 in the front-rear direction may be the same or substantially the same as a position of a center pillar 9 (see FIG. 2 and the like) in the front-rear direction.

The cross member 60 may include a cross member body 61 and one or more brackets 62. The brackets 62 are respectively fixed to both sides of the cross member body 61 in the left-right direction. The brackets 62 are fixed to the cross member body 61. The left bracket 62 is fixed to the left side sill 2 e.g., by welding, and the right bracket 62 is fixed to the right side sill 2 e.g., by welding. As a result, end portions of the cross member 60 in the left-right direction are fixed to the side sills 2. A lower end of the cross member body 61 is fixed to an upper surface of the floor panel 3 and an upper surface of the tunnel panel 4.

A pair of left and right floor frames 8 may be arranged in front of the front cross member 60. The floor frames 8 each extend in the front-rear direction.

As illustrated in FIG. 2, a battery B is disposed below the floor panel 3. For example, in a state of being accommodated in a battery case 70, the battery B is disposed below the floor panel 3.

The battery B may be supported by a lower wall portion (an inner lower wall portion 22 described below) of the side sill 2 together with the battery case 70 via a support portion 80. For example, a bracket 71 extending outward in the vehicle width direction is fixed to an outer portion (a right portion in FIG. 2) of the battery case 70 in the vehicle width direction.

A hole 71a through which a bolt 81 is inserted is formed in an outer end portion (a right end portion in FIG. 2) of the bracket 71 in the vehicle width direction. The bolt 81 is fastened to a nut 82 fixed to a portion in a closed cross section of the lower wall portion of the side sill 2.

The bolt 81 is inserted into the hole 71a of the bracket 71 from below and fixed to the nut 82. Accordingly, the battery B is supported by the side sill 2 via the battery case 70 and the bracket 71.

The bolt 81 and the nut 82 may constitute the support portion 80. Between the bracket 71 and an inner lower wall portion 22, a bush 72 may be disposed around the bolt 81. The bush 72 is formed of an elastic member. Although not illustrated in the drawing, a center portion of each of the battery cases 70 in the vehicle width direction is attached to and supported by the tunnel panel 4.

### (Configuration of Side Sill)

Hereinafter, a configuration of the side sill 2 will be described in detail. As described above, since the body structure of the vehicle 1 is bilaterally symmetrical, the configuration of the right side sill 2 will be described in detail below, and the detailed description of the left side sill 2 will be omitted. In the description of the right side sill 2, the right side corresponds to the outer side in the vehicle width direction, and the left side corresponds to the inner side in the vehicle width direction.

### <Outer Panel, Inner Panel>

As illustrated in FIG. 2, the side sill 2 includes an outer panel 10 located on the relatively right side and an inner panel 20 located on the relatively left side.

The outer panel 10 may have a hat-shaped cross-sectional shape that opens to the left. The outer panel 10 has: an outer upper wall portion 11 extending in the left-right direction and the front-rear direction; an outer lower wall portion 12 located below the outer upper wall portion 11 to oppose the outer upper wall portion 11 in an up-down direction and extending in the left-right direction and the front-rear direction; and an outer wall portion 13 connecting a right end portion of the outer upper wall portion 11 and a right end portion of the outer lower wall portion 12 in the up-down direction and extending in the up-down direction and the front-rear direction.

An outer flange 14 may extend in the up-down direction from a left end portion of the outer upper wall portion 11 and a left end portion of the outer lower wall portion 12. The outer upper wall portion 11 may be inclined downward to the right. The outer lower wall portion 12 may be inclined upward to the right.

At a position of the center pillar 9 in the front-rear direction, a lower end portion of the center pillar 9 may be located on the right side of the outer panel 10. The lower end portion of the center pillar 9 is fixed to the outer panel 10 e.g., by welding.

The inner panel 20 may have a hat-shaped cross-sectional shape that opens to the right. The inner panel 20 has: an inner upper wall portion 21 extending in the left-right direction and the front-rear direction; the inner lower wall portion 22 located below the inner upper wall portion 21 to oppose the inner upper wall portion 21 in the up-down direction and extending in the left-right direction and the front-rear direction; and an inner wall portion 23 connecting a left end portion of the inner upper wall portion 21 and a left end portion of the inner lower wall portion 22 in the up-down direction and extending in the up-down direction and the front-rear direction.

An inner flange 24 may extend in the up-down direction from a right end portion of the inner upper wall portion 21 and a right end portion of the inner lower wall portion 22. The inner upper wall portion 21 may be inclined downward to the left. The inner lower wall portion 22 may extend straight in the left-right direction. The inner lower wall portion 22 may have a hole 22a through which the bolt 81 is inserted.

In a state where the openings of the outer panel 10 and the inner panel 20 face each other in the left-right direction, the outer flange 14 and the inner flange 24 are superimposed in the left-right direction. The outer flange 14 and the inner flange 24 are joined e.g., by welding. Accordingly, the side sill 2 has a rectangular closed cross-sectional structure including the outer upper wall portion 11, the outer lower wall portion 12, the outer wall portion 13, the inner upper wall portion 21, the inner lower wall portion 22, and the inner wall portion 23.

The floor panel 3 and the cross member 60 may be fixed to the inner panel 20. For example, as illustrated in FIG. 2, the floor panel joint portion 3b of the floor panel 3 is configured by bending the right end portion of the floor panel main body 3a upward, extends along the inner wall portion 23, and is joined to a left side surface of the inner wall portion 23.

The bracket 62 of the cross member 60 may be disposed to cover a corner portion between the inner upper wall portion 21 and the inner wall portion 23. The bracket 62 has a welding margin 63 extending continuously along the inner upper wall portion 21 and the inner wall portion 23.

A portion of the welding margin 63 along the inner upper wall portion 21 may be joined to the inner upper wall portion 21. A portion of the welding margin 63 along the inner wall portion 23 is superimposed on the right end portion of the floor panel 3 in the left-right direction, and is joined to the inner wall portion 23 via the floor panel 3.

FIG. 2 illustrates a fixing structure of the rear cross member 60 and the inner panel 20. The structure of the front cross member 60 and the inner panel 20 is the same as the fixing structure of the rear cross member 60 and the inner panel 20.

### <Outer Reinforcement>

For example, as illustrated in FIG. 2, an outer reinforcement 30 is fixed to the outer panel 10 in the closed cross-sectional structure of the side sill 2. The outer reinforcement 30 is formed by bending a single plate.

Material strength of the outer reinforcement 30 is lower than material strength of the cross member body 61. Here, the material strength means strength of the plate itself constituting the member. The material strength is a parameter determined by, for example, tensile strength and thickness of the plate. The material strength is increased as the tensile strength is increased, and is increased as the thickness is increased.

The outer reinforcement 30 may have a hat-shaped cross-sectional shape that opens to the right. The outer reinforcement 30 includes: an upper surface portion 31 extending in the left-right direction and the front-rear direction; a lower surface portion 32 located below the upper surface portion 31 to oppose the upper surface portion 31 and extending in the left-right direction and the front-rear direction; and a connection surface portion 33 connecting a left end portion of the upper surface portion 31 and a left end portion of the lower surface portion 32 in the up-down direction and extending in the up-down direction and the front-rear direction.

The outer reinforcement 30 may also include: an upper flange 34 that extends upward from a right end portion of the upper surface portion 31 along the outer wall portion 13 and is fixed to the outer wall portion 13 by welding; and a lower flange 35 that extends downward from a right end portion of the lower surface portion 32 along the outer wall portion 13 and is fixed to the outer wall portion 13 by welding. When the upper flange 34 and the lower flange 35 are fixed to the outer wall portion 13, the outer wall portion 13, the upper surface portion 31, the lower surface portion 32, and the connection surface portion 33 may form a rectangular closed cross section.

The upper surface portion 31 may be inclined upward to the right from an upper end portion of the connection surface portion 33. The lower surface portion 32 may be inclined downward to the left from a lower end portion of the connection surface portion 33.

The connection surface portion 33 is a vertical surface extending straight or substantially straight in the up-down direction and the front-rear direction. The upper surface portion 31 may be located at the same position as the floor panel main body 3a in the up-down direction.

The connection surface portion 33 is spaced apart from the outer wall portion 13 in the left-right direction and is located on the left side of other portions of the outer reinforcement 30. A lower end of the connection surface portion 33 may be located above the outer lower wall portion 12 and the inner lower wall portion 22. The connection surface portion 33 corresponds to an overlapping portion, a position of which overlaps a position of an inner reinforcement 40 described below in the up-down direction or the side-view of the vehicle 1.

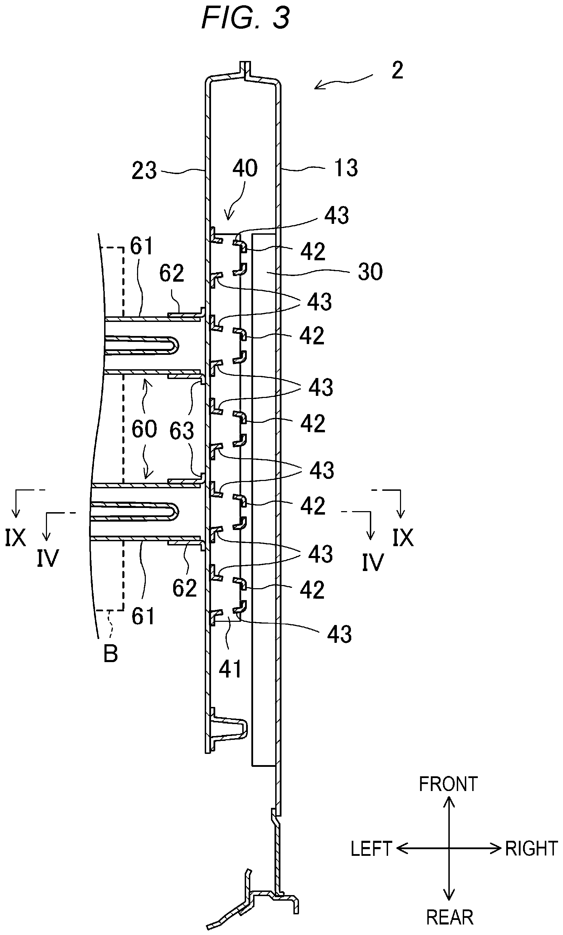

As illustrated in FIG. 3, the outer reinforcement 30 extends straight or substantially straight in the front-rear direction. A front end of the outer reinforcement 30 may be located in front of the front cross member 60, and a rear end of the outer reinforcement 30 may be located behind the rear cross member 60. That is, a position of the outer reinforcement 30 overlaps a position of the cross member 60 in the front-rear direction or in the side-view of the vehicle 1. In addition, the outer reinforcement 30 overlaps an area where the battery B is disposed in the front-rear direction or in the side-view of the vehicle 1.

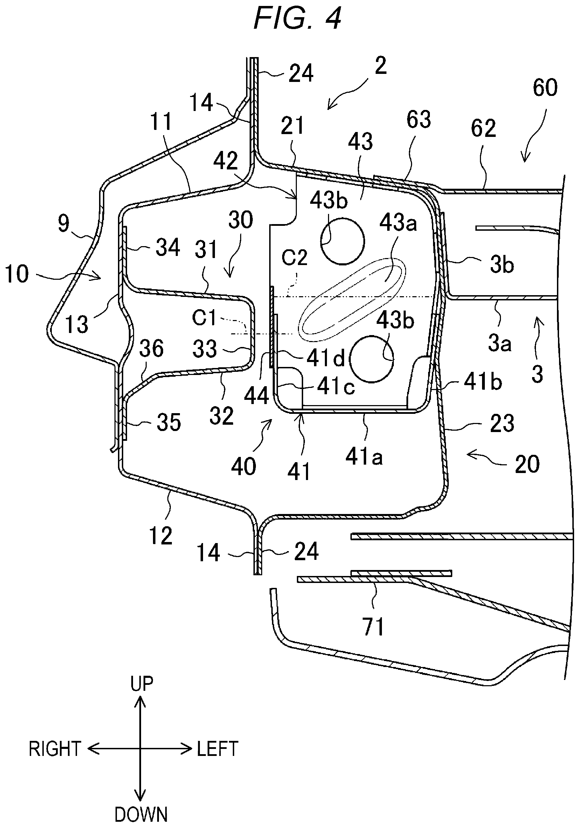

For example, as illustrated in FIG. 4, a corner portion between the lower surface portion 32 and the lower flange 35 has a deformation promoting portion 36. The deformation promoting portion 36 may promote upward displacement of the lower surface portion 32 around the corner portion.

The deformation promoting portion 36 may be a bead formed by protruding the corner portion leftward and downward. A bottom surface of the deformation promoting portion 36 may have an inclined surface shape that connects the right end portion of the lower surface portion 32 and an upper end portion of the lower flange 35.

Particularly, a deformation promoting portion as described above is not provided in a corner portion between the upper surface portion 31 and the upper flange 34. A position of the deformation promoting portion 36 overlaps a position of a lateral surface portion 44 of a second inner reinforcement 42, which will be described below, in the front-rear direction.

The bottom surface of the deformation promoting portion 36 may have a curved shape having a larger radius of curvature than a radius of curvature of a portion other than the deformation promoting portion 36 in the corner portion. In addition, the deformation promoting portion 36 may be formed by cutting out a part of the corner portion between the lower surface portion 32 and the lower flange 35.

### <Inner Reinforcement>

In the closed cross section of the side sill 2, the inner reinforcement 40 may be fixed to the inner panel 20. As illustrated in FIG. 3, the position of the inner reinforcement 40 overlaps the position of the outer reinforcement 30 in the front-rear direction or in the side-view of the vehicle 1. That is, the position of the connection surface portion 33 of the outer reinforcement 30 overlaps the position of the inner reinforcement 40 in the front-rear direction or in the side-view of the vehicle 1. The inner reinforcement 40 may include a first inner reinforcement 41 and the second inner reinforcement 42.

For example, as illustrated in FIG. 4, the first inner reinforcement 41 is formed of a single plate. Material strength of the first inner reinforcement 41 is lower than the material strength of the outer reinforcement 30.

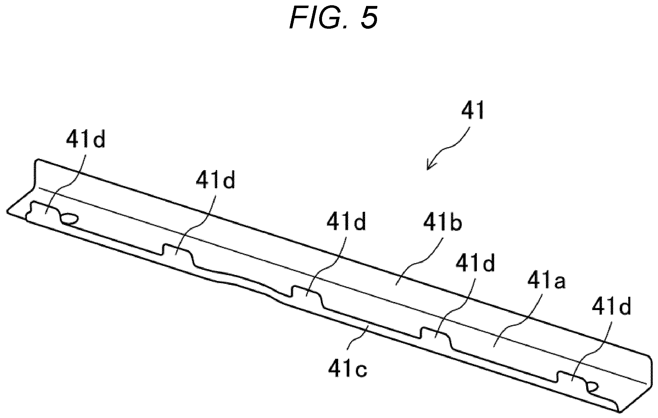

As illustrated in FIGs. 4 and 5, the first inner reinforcement 41 may have a U-shaped cross-sectional shape that opens upward. The first inner reinforcement 41 has: a horizontal surface portion 41a extending in the left-right direction and the front-rear direction; an inner bent portion 41b bent upward from a left end portion of the horizontal surface portion 41a and extending in the up-down direction and the front-rear direction; and an outer bent portion 41c bent upward from a right end portion of the horizontal surface portion 41a and extending in the up-down direction and the front-rear direction.

Particularly, as illustrated in FIG. 4, the horizontal surface portion 41a is located above the inner lower wall portion 22 and is spaced apart from the inner lower wall portion 22 in the up-down direction. The horizontal surface portion 41a is located above a tip of the bolt 81. The horizontal surface portion 41a is located below the lower end of the connection surface portion 33. A position of the horizontal surface portion 41a overlaps a position of the area where the battery B is provided in the front-rear direction or in the side-view of the vehicle 1.

A length of the inner bent portion 41b in the up-down direction may be longer than a length of the outer bent portion 41c in the up-down direction. A position of the inner bent portion 41b overlaps the position of the connection surface portion 33 in the up-down direction or in the side-view of the vehicle. The inner bent portion 41b is fixed to a right side surface of the inner wall portion 23 e.g., by welding.

For example, as illustrated in FIG. 5, the outer bent portion 41c has one or a plurality of (five in FIG. 5) protruding portions 41d protruding upward. The protruding portions 41d are spaced apart from each other in the front-rear direction. An upper end portion of each of the protruding portions 41d may be located below an upper end portion of the inner bent portion 41b.

Particularly, as illustrated in FIG. 4, a position of each of the protruding portions 41d overlaps the position of the connection surface portion 33 in the up-down direction or in the side-view of the vehicle 1. As illustrated in FIG. 2, a portion of the outer bent portion 41c other than the protruding portions 41d may be located below the connection surface portion 33.

For example, as illustrated in FIG. 3, one or a plurality of (here, five) second inner reinforcements 42 are provided. The second inner reinforcements 42 are spaced apart from each other in the front-rear direction.

The protruding portions 41d of the first inner reinforcement 41 are respectively disposed in a manner to correspond to the positions of the second inner reinforcements 42. A position of one of the second inner reinforcements 42 overlaps a position of the front cross member 60 in the front-rear direction or in the side-view of the vehicle 1.

A position of the other one of the second inner reinforcements 42 overlaps the position of the rear cross member 60 in the front-rear direction or in the side-view of the vehicle 1. The position of each of the second inner reinforcements 42 overlaps the position of the connection surface portion 33 in the front-rear direction or in the side-view of the vehicle.

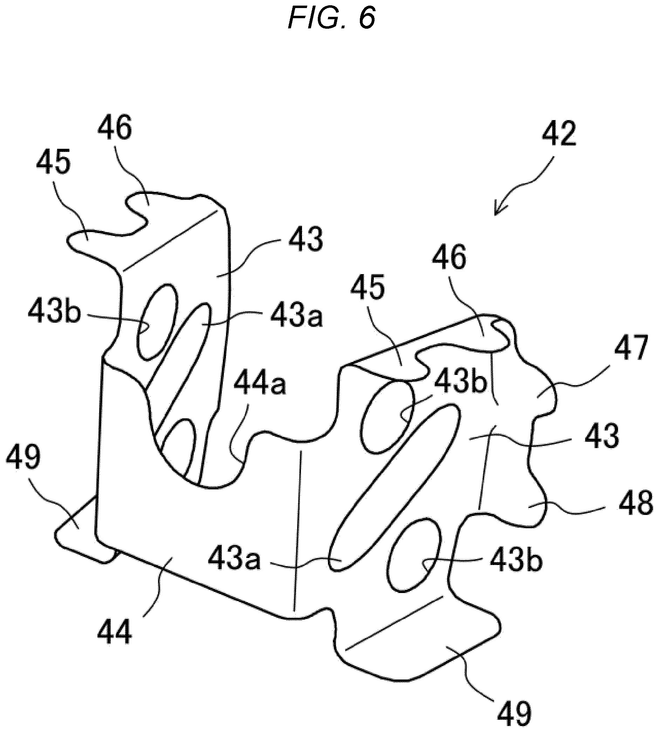

As illustrated in FIG. 6, the second inner reinforcement 42 may be formed of a single plate. Material strength of the second inner reinforcement 42 is the same as the material strength of the first inner reinforcement 41 and/or is lower than the material strength of the outer reinforcement 30.

The second inner reinforcement 42 has: at least one, particularly a pair of vertical surface portions 43 opposing each other in the front-rear direction and extending in the up-down direction and the left-right direction; and the lateral surface portion 44 extending in the front-rear direction and the up-down direction so as to connect right end portions of the paired vertical surface portions 43. The lateral surface portion 44 is provided at a center of the right end portion of the vertical surface portion 43.

In the right end portion of the vertical surface portion 43, the lateral surface portion 44 is not connected to an upper end portion and a lower end portion thereof. A distance between the paired vertical surface portions 43 in the front-rear direction is shorter than a width of the cross member 60 in the front-rear direction. In the second inner reinforcement 42 whose position overlaps the position of the cross member 60 in the front-rear direction or in the side-view of the vehicle 1, positions of both of the paired vertical surface portions 43 overlap the position of the cross member 60 in the vehicle front-rear direction or in the side-view of the vehicle 1.

As illustrated in FIG. 4, the vertical surface portion 43 may have a rectangular shape. The position of the vertical surface portion 43 overlaps the position of the connection surface portion 33 in the up-down direction or in the side-view of the vehicle 1. A center C2 of the vertical surface portion 43 in the up-down direction is located above a center C1 of the connection surface portion 33 in the up-down direction or in the side-view of the vehicle 1.

The vertical surface portion 43 may have a bead 43a that extends while being inclined upward to the left from the right side. As illustrated in FIGs. 2 and 4, a position of a lower end portion of the bead 43a overlaps the position of the connection surface portion 33 of the outer reinforcement 30 in the up-down direction or in the side-view. An upper end portion of the bead 43a is located above the floor panel 3, and a position thereof overlaps the position of the cross member 60 in the up-down direction or in the side-view.

The portion of the bead 43a may have higher rigidity than the other portions of the vertical surface portion 43. The vertical surface portion 43 may have one or more through holes 43b on an upper right side and a lower left side of the bead 43a.

For example, as illustrated in FIG. 6, the vertical surface portion 43 has a first upper joint portion 45 and a second upper joint portion 46 in an upper end portion thereof. The first upper joint portion 45 is located on the right side of the second upper joint portion 46.

The vertical surface portion 43 has a first inner joint portion 47 and a second inner joint portion 48 in a left end portion thereof. The first inner joint portion 47 is located above the second inner joint portion 48.

The vertical surface portion 43 has a lower joint portion 49 in a lower end portion thereof. The first upper joint portion 45, the second upper joint portion 46, the first inner joint portion 47, the second inner joint portion 48, and the lower joint portion 49 extend forward in the front vertical surface portion 43 while extending rearward in the rear vertical surface portion 43.

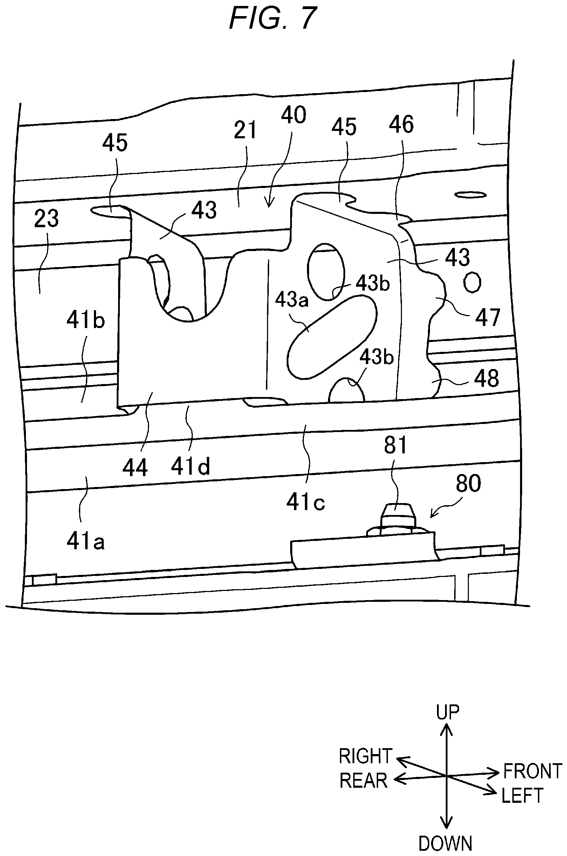

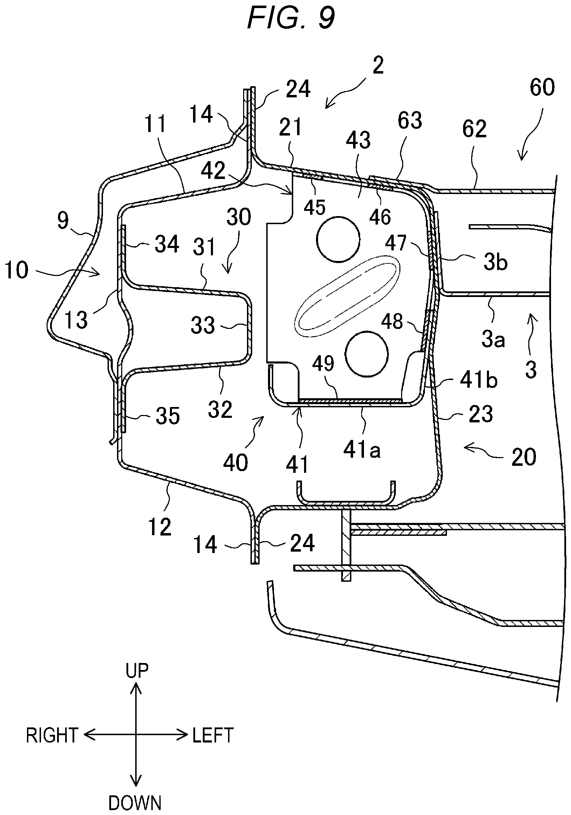

As illustrated in FIGs. 7 and 9, the first upper joint portion 45 and the second upper joint portion 46 may be joined to a lower surface of the inner upper wall portion 21. As illustrated in FIG. 9, the first upper joint portion 45 and the second upper joint portion 46 may be located above the connection surface portion 33.

Particularly, the second upper joint portion 46 is superimposed on and joined to the inner upper wall portion 21 and the welding margin 63 of the bracket 62 in the up-down direction. That is, at a position of the second upper joint portion 46, three of the second upper joint portion 46, the inner upper wall portion 21, and the welding margin 63 of the bracket 62 are joined.

As illustrated in FIGs. 7 and 9, the first inner joint portion 47 may be joined to the right side surface of the inner wall portion 23. As illustrated in FIG. 9, the first inner joint portion 47 may be superimposed on and joined to the inner wall portion 23 and the floor panel joint portion 3b in the left-right direction. That is, at a position of the first inner joint portion 47, three of the first inner joint portion 47, the inner wall portion 23, and the floor panel joint portion 3b are joined. The position of the first inner joint portion 47 overlaps a position of the upper end portion of the bead 43a in the up-down direction or in the side-view of the vehicle 1.

As illustrated in FIGs. 7 and 9, the second inner joint portion 48 may be joined to a right side surface of the inner bent portion 41b. As illustrated in FIG. 9, the second inner joint portion 48 may be superimposed on and joined to the inner bent portion 41b and the inner wall portion 23 in the left-right direction. That is, at a position of the second inner joint portion 48, three of the second inner joint portion 48, the inner bent portion 41b, and the inner wall portion 23 are joined. The position of the second inner joint portion 48 overlaps the position of the connection surface portion 33 in the up-down direction or in the side-view of the vehicle 1.

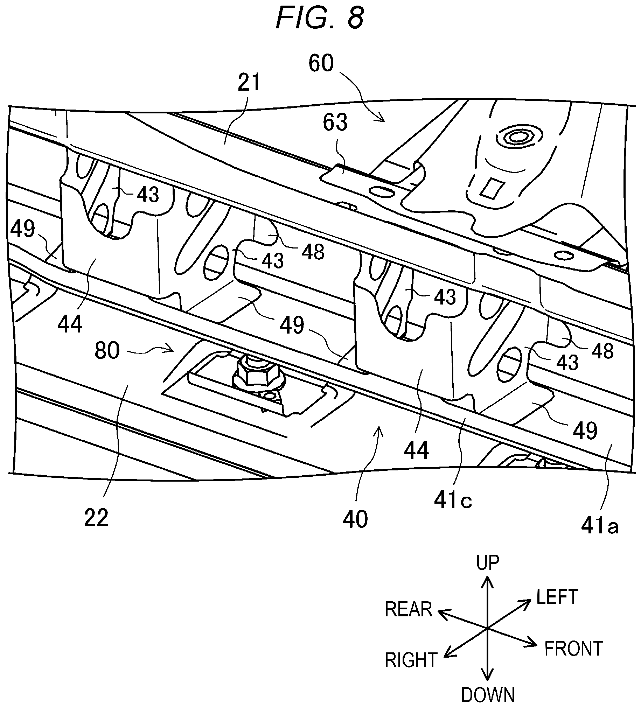

As illustrated in FIGs. 8 and 9, the lower joint portion 49 may be joined to an upper surface of the horizontal surface portion 41a. The lower joint portion 49 has a wider joint width than the first upper joint portion 45, the second upper joint portion 46, the first inner joint portion 47, and the second inner joint portion 48. As illustrated in FIG. 9, the lower joint portion 49 is located below the connection surface portion 33.

As described above, the vertical surface portion 43 is joined and fixed to the horizontal surface portion 41a, the inner bent portion 41b, the inner upper wall portion 21, and the inner wall portion 23. Since three sides of the upper end portion, the left end portion, and the lower end portion of the vertical surface portion 43 are fixed, it is easy to maintain a shape thereof even when a load is applied thereto from the right side.

For example, as illustrated in FIG. 6, the lateral surface portion 44 is located below the first upper joint portion 45 and the second upper joint portion 46 and above the lower joint portion 49. The lateral surface portion 44 has a recessed portion 44a, which is recessed downward, at a center in the front-rear direction.

As illustrated in FIG. 4, a position of the lateral surface portion 44 overlaps the position of the connection surface portion 33 in the up-down direction or the side-view of the vehicle 1. The lateral surface portion 44 is spaced apart from the connection surface portion 33 in the left-right direction.

The lateral surface portion 44 is located on the right side of the protruding portion 41d and overlaps the protruding portion 41d in the left-right direction. The lateral surface portion 44 is fixed to the protruding portion 41d by welding.

### (Operation of Side Sill During Side Collision)

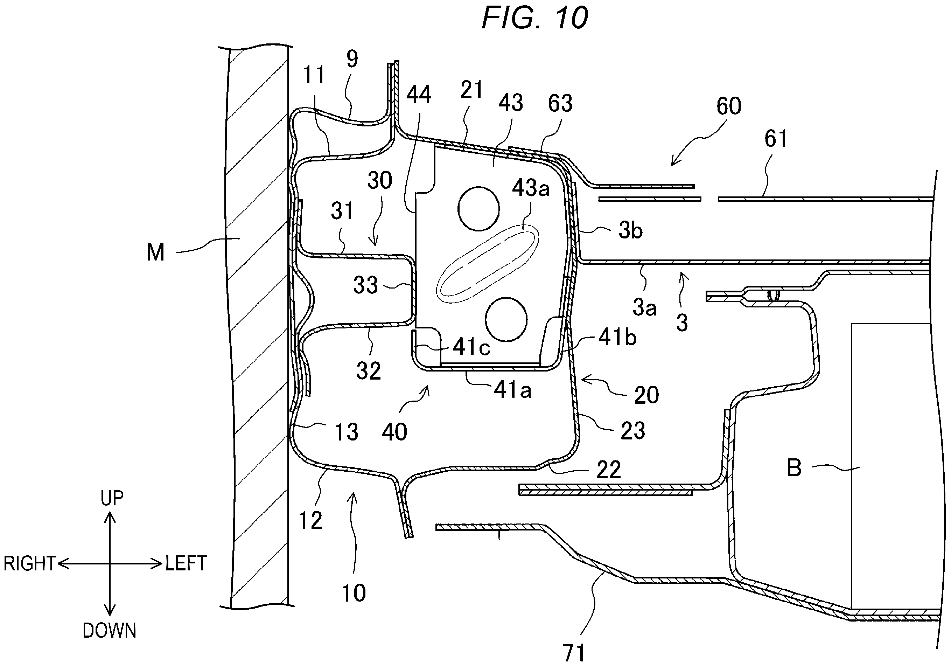

Here, in the structure in which the battery B is disposed under the floor panel 3, it is required to prevent application of a collision load during a side collision to the battery B as much as possible. Therefore, in the present embodiment, as described above, the outer reinforcement 30 and the inner reinforcement 40 are arranged so that the collision load during the side collision is transmitted to the floor panel 3 and the cross member 60. Hereinafter, operation of the side sill during the side collision will be described with reference to FIGs. 10 to 12. FIGs. 10 to 12 each illustrate a case where a collision body M collides with a position near the center pillar 9 from the right side.

Particularly, as illustrated in FIG. 10, it is assumed that the collision body M is advanced to the left and abuts the side sill 2. At this time, the outer panel 10 is deformed, and the outer reinforcement 30 is displaced to the left side. As a result, the connection surface portion 33 of the outer reinforcement 30 and the second inner reinforcement 42 abut each other. The connection surface portion 33 abuts a portion of the second inner reinforcement 42 located below the first upper joint portion 45 and the second upper joint portion 46 and above the lower joint portion 49, in particular, the lateral surface portion 44.

When the connection surface portion 33 and the second inner reinforcement 42 abut each other, the collision load is transmitted from the outer reinforcement 30 to the second inner reinforcement 42. Since the second inner reinforcement 42 has the vertical surface portion 43 fixed to the inner upper wall portion 21 and the inner wall portion 23, the load transmitted from the outer reinforcement 30 to the second inner reinforcement 42 is transmitted leftward and upward via the vertical surface portion 43.

Since the floor panel 3 and the cross member 60 are fixed to the left and upper portions of the side sill 2, the collision load is transmitted from the second inner reinforcement 42 to the floor panel 3 and the cross member 60. Since the vertical surface portion 43 has the bead 43a, the collision load is efficiently transmitted from the outer reinforcement 30 to the floor panel 3 and the cross member 60 via the bead 43a.

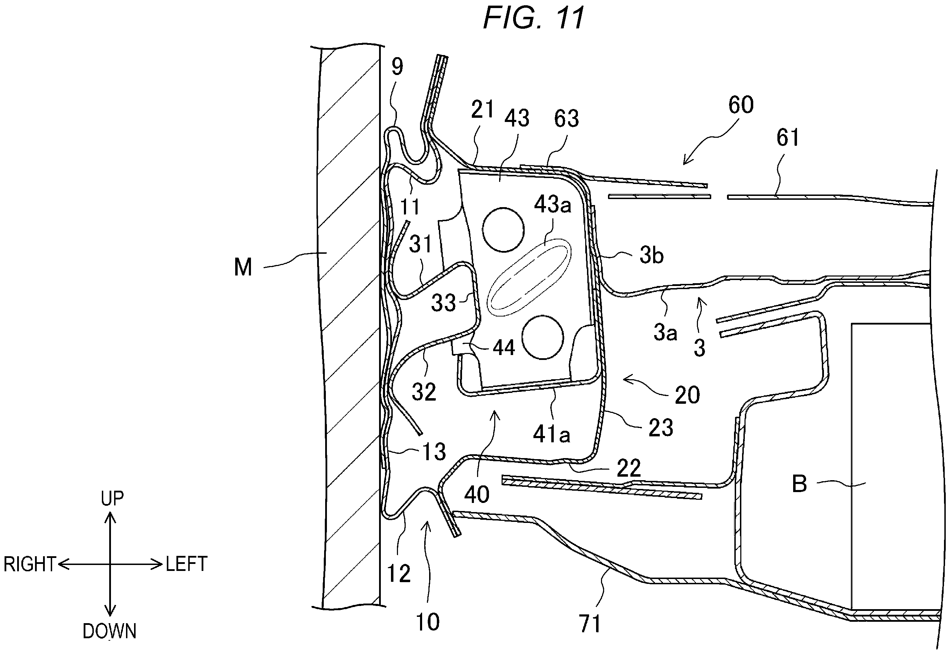

From the state in FIG. 10, as illustrated in FIG. 11, when the collision body M enters the left side, the outer reinforcement 30 is deformed by a repulsive load from the vertical surface portion 43. The lower surface portion 32 of the outer reinforcement 30 has the deformation promoting portion 36 in the corner portion between the lower surface portion 32 and the lower flange 35, and thus is easily displaced when compared to the upper surface portion 31.

Therefore, when the repulsive load is applied, the lower surface portion 32 is rotationally displaced upward with the corner portion being a fulcrum. Along with the displacement of the lower surface portion 32, the upper surface portion 31 and the connection surface portion 33 are displaced upward. Accordingly, the second inner reinforcement 42 is pushed upward to the left. As a result, the collision load is efficiently transmitted from the outer reinforcement 30 to the floor panel 3 and the cross member 60.

The second inner reinforcement 42 is rotationally displaced by the collision load. Since the center C2 of the vertical surface portion 43 in the up-down direction is located above the center C1 of the connection surface portion 33 in the up-down direction, the second inner reinforcement 42 is rotationally displaced upward to the left. Therefore, even when the second inner reinforcement 42 is rotationally displaced, the collision load is efficiently transmitted from the outer reinforcement 30 to the floor panel 3 and the cross member 60.

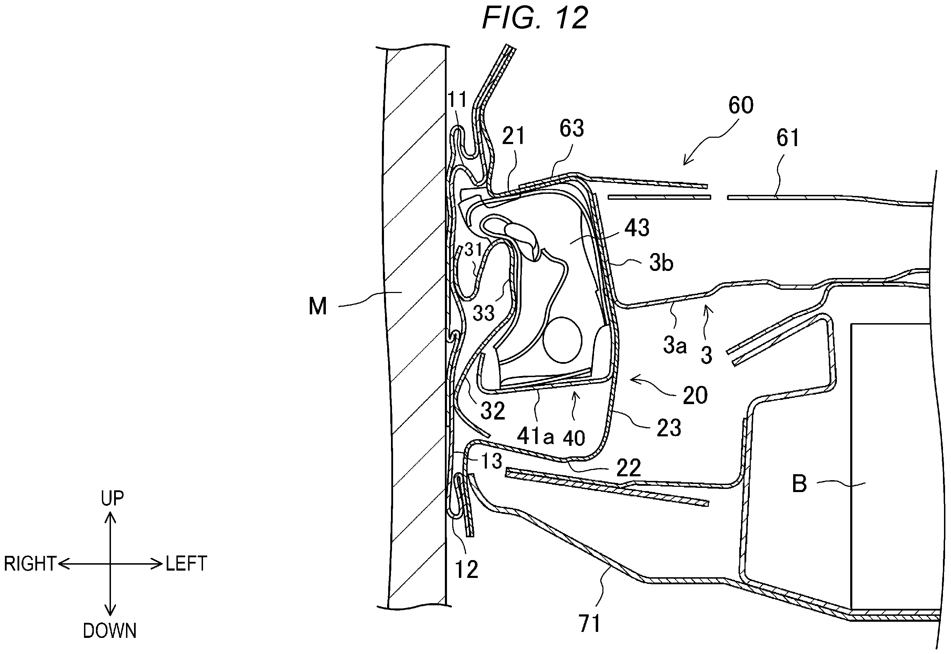

From the state in FIG. 11, as illustrated in FIG. 12, when the collision body M enters the left side, the second inner reinforcement 42 is crushed. Since the material strength of the second inner reinforcement 42 is lower than the material strength of the outer reinforcement 30, the second inner reinforcement 42 is crushed before the outer reinforcement 30.

Crushing of the second inner reinforcement 42 absorbs a part of the collision load. Since the connection surface portion 33 abuts the portion of the second inner reinforcement 42 that is located below the first upper joint portion 45 and the second upper joint portion 46 and above the lower joint portion 49, the shapes of the upper end portion, the left end portion, and the lower end portion are easily maintained. Thus, the absorption of the collision load due to crushing of the second inner reinforcement 42 and the transmission of the load via the second inner reinforcement 42 can be performed simultaneously.

### (Effects of the Embodiment)

As it has been described so far, in the present embodiment, the outer reinforcement 30 includes the connection surface portion 33 that is located on the inner side of the other portions of the outer reinforcement 30 in the vehicle width direction and overlaps the inner reinforcement 40 in the up-down direction. The inner reinforcement 40 includes: the first inner reinforcement 41 that has the horizontal surface portion 41a extending in the front-rear direction and the vehicle width direction, and the inner end portion in the vehicle width direction of which is fixed to the inner wall portion 23; and the second inner reinforcement that has the vertical surface portions 43 fixed to the horizontal surface portion 41a, the inner upper wall portion 21, and the inner wall portion 23 and extending in the up-down direction and the vehicle width direction.

When the connection surface portion 33 of the outer reinforcement 30 abuts the inner reinforcement 40, the collision load is transmitted inward in the vehicle width direction and upward via the vertical surface portion 43. Since the floor panel 3 and the cross member 60 are fixed to the portion of the side sill 2 located on the inner side in the vehicle width direction and above the battery, the collision load is transmitted from the inner reinforcement 40 to the floor panel 3 and the cross member 60. As a result, it is possible to prevent the transmission of the collision load during the side collision to the battery B.

Particularly, since the vertical surface portion 43 is fixed to the horizontal surface portion 41a, the inner upper wall portion 21, and the inner wall portion 23, the vertical surface portion 43 is unlikely to be buckled by the collision load. Accordingly, the collision load can be efficiently transmitted from the outer reinforcement 30 to the floor panel 3 and the cross member 60.

Further particularly, in the present embodiment, the center C2 of the inner reinforcement 40 in the up-down direction is located above the center C1 of the connection surface portion 33 in the up-down direction. Accordingly, even in the case where the inner reinforcement 40 is rotationally displaced by the collision load when the connection surface portion 33 abuts the inner reinforcement 40, the inner reinforcement 40 is rotationally displaced inward in the vehicle width direction and upward. Therefore, the transmission path of the collision load from the inner reinforcement 40 to the floor panel 3 and the cross member 60 is easily maintained. Accordingly, it is possible to prevent the collision load from being transmitted to the battery B during the side collision.

Further particularly, on the present embodiment, the connection surface portion 33 has the surface extending in the front-rear direction and the up-down direction and overlaps the vertical surface portion 43 in the front-rear direction. As a result, the connection surface portion 33 easily abuts the vertical surface portion 43. In addition, since the connection surface portion 33 contacts the vertical surface portion 43 in the widest possible range, the collision load can be distributed and applied to the vertical surface portion 43. As a result, the collision load is efficiently transmitted from the outer reinforcement 30 to the floor panel 3 and the cross member 60. Therefore, it is possible to prevent the collision load during the side collision from being transmitted to the battery B.

Further particularly, in the present embodiment, the vertical surface portion 43 overlaps the cross member 60 in the front-rear direction. The collision load is efficiently transmitted to the cross member 60 via the vertical surface portion 43. Accordingly, it is possible to prevent the collision load from being transmitted to the battery B during the side collision.

Further particularly, in the present embodiment, the second inner reinforcement 42 further includes the lateral surface portion 44 extending in the front-rear direction and the up-down direction from the outer end portion of the vertical surface portion 43 in the vehicle width direction, and the lateral surface portion 44 overlaps the connection surface portion 33 in the up-down direction. Accordingly, the collision load is transmitted from the connection surface portion to the vertical surface portion 43 via the lateral surface portion 44. The collision load is transmitted from the vertical surface portion 43 to the floor panel 3 and the cross member 60. As a result, it is possible to prevent the transmission of the collision load during the side collision to the battery B.

Further particularly, in the present embodiment, the vertical surface portion 43 has the bead 43a that is inclined upward to the inner side in the vehicle width direction from the outer side in the vehicle width direction. As a result, the collision load is efficiently transmitted inward in the vehicle width direction and upward by the bead 43a. As a result, since the collision load is transmitted to the floor panel 3 and the cross member 60, it is possible to prevent the collision load during the side collision from being transmitted to the battery B.

Further particularly, in the present embodiment, the connection surface portion 33 is the surface portion extending in the up-down direction, and the outer reinforcement 30 further includes: the upper surface portion 31 extending outward in the vehicle width direction from the upper end of the connection surface portion 33 toward the outer wall portion 13; and the lower surface portion 32 extending outward in the vehicle width direction from the lower end of the connection surface portion 33 toward the outer wall portion 13. In this way, the closed cross section formed by the outer wall portion 13 and the outer reinforcement 30 can be made as large as possible, and rigidity of the outer reinforcement 30 is improved. As a result, the collision load can be efficiently transmitted from the outer reinforcement 30 to the vertical surface portion 43, and the collision load during the side collision can be prevented from being transmitted to the battery B.

When the collision load is relatively large, the outer reinforcement 30 is crushed, and at least a part of the collision load is thereby absorbed. Accordingly, it is possible to prevent the collision load from being transmitted to the battery B during the side collision.

Further particularly, in the present embodiment, the connection surface portion 33 overlaps the vertical surface portion 43 in the vehicle front-rear direction, and the upper surface portion 31 is located at the same position as the floor panel main body 3a in the up-down direction. Accordingly, the collision load is efficiently transmitted from the upper surface portion 31 to the floor panel 3 via the vertical surface portion 43. As a result, it is possible to prevent the transmission of the collision load during the side collision to the battery B.

Further particularly, in the present embodiment, the outer reinforcement 30 further includes: the upper flange 34 that extends upward from the outer end portion of the upper surface portion 31 in the vehicle width direction and is fixed to the outer wall portion 13; and the lower flange 35 that extends downward from the outer end portion of the lower surface portion 32 in the vehicle width direction and is fixed to the outer wall portion 13, the lower surface portion 32 is inclined downward to the outer side in the vehicle width direction, the corner portion between the lower surface portion 32 and the lower flange 35 has the deformation promoting portion 36, and the corner portion between the upper surface portion 31 and the upper flange 34 does not have a deformation promoting portion. As a result, the lower surface portion 32 is more easily displaced than the upper surface portion 31. Since the lower surface portion 32 is inclined downward to the outer side in the vehicle width direction, the lower surface portion 32 is displaced upward during the side collision. Therefore, during the side collision, the outer reinforcement 30 is deformed such that the connection surface portion 33 is displaced upward. Accordingly, since the collision load is transmitted from the outer reinforcement 30 to the upper portion of the inner reinforcement 40, the collision load is efficiently transmitted from the outer reinforcement 30 to the floor panel 3 and the cross member 60. As a result, it is possible to prevent the transmission of the collision load during the side collision to the battery B.

Further particularly, in the present embodiment, the material strength of the outer reinforcement 30 is lower than that of the cross member 60, and the material strength of the second inner reinforcement 42 is lower than that of the outer reinforcement 30. Accordingly, when the collision load is relatively large, the second inner reinforcement 42 is crushed, and the collision load can thereby be absorbed. Even in the case where the second inner reinforcement 42 is crushed, the collision load can be transmitted to the floor panel 3 and the cross member 60 as long as the second inner reinforcement 42 is fixed to the inner upper wall portion 21 and the inner wall portion 23. Therefore, even when the collision load is relatively large, it is possible to prevent the collision load during the side collision from being transmitted to the battery B.

Further particularly, in the case where the collision load is relatively large, the outer reinforcement 30 is crushed before the deformation of the cross member 60 and thus can absorb the collision load. Accordingly, it is possible to prevent the collision load from being transmitted to the battery B during the side collision.

### (Other Embodiments)

The technique disclosed herein is not limited to the above-described embodiment.

In the above embodiment, the center C2 of the inner reinforcement 40 in the up-down direction is located above the center C1 of the connection surface portion 33 in the up-down direction. The present invention is not limited thereto, and the center C2 of the inner reinforcement 40 in the up-down direction may be located at the same position in the up-down direction as the center C1 of the connection surface portion 33 in the up-down direction.

In the above embodiment, both of the paired vertical surface portions 43 of the second inner reinforcement 42 overlap the cross member 60 in the front-rear direction. The present invention is not limited thereto, and only one of the paired vertical surface portions 43 may overlap the cross member 60 in the front-rear direction, or both of the paired vertical surface portions 43 may be shifted from the cross member 60 in the front-rear direction. In either case, the first inner reinforcement 41 overlaps the cross member 60 in the front-rear direction. Even in the case where both of the paired vertical surface portions 43 are shifted from the cross member 60 in the front-rear direction, the cross member 60 can receive the collision load during the side collision when the collision load is transmitted to the inner upper wall portion 21 and the inner wall portion 23 by the vertical surface portion 43.

In the above embodiment, the second inner reinforcement 42 has the lateral surface portion 44, but the lateral surface portion 44 is not an essential component and may be omitted.

In the above embodiment, the vertical surface portion 43 has the bead 43a, but the bead 43a is not an essential component and may be omitted.

In the above embodiment, the corner portion between the lower surface portion 32 and the lower flange 35 has the deformation promoting portion 36, but the deformation promoting portion 36 is not an essential component and may be omitted.

The above-described embodiments are merely illustrative, and should not be construed as limiting the scope of the present invention. The scope of the present invention is defined by claim 1.

### [Industrial Applicability]

The technique disclosed herein is useful as a vehicle lower body structure.

### [Reference Signs List]

2: side sill
3: floor panel
13: outer wall portion
21: inner upper wall portion
23: inner wall portion
30: outer reinforcement
31: upper surface portion
32: lower surface portion
33: connection surface portion (overlapping portion)
34: upper flange
35: lower flange
36: deformation promoting portion
40: inner reinforcement
41: first inner reinforcement
41a: horizontal surface portion
42: second inner reinforcement
43: vertical surface portion
43a: bead
44: lateral surface portion
60: cross member
B: battery

## Claims

1. A vehicle lower body structure comprising:
a pair of left and right side sills (2), each of which has a closed cross-sectional structure extending in a vehicle front-rear direction;
a floor panel (3) that is fixed to the side sill (2) and constitutes a floor surface of a cabin;
a battery (B) that is disposed below the floor panel (3) and supported by the side sill (2);
a cross member (60) that extends in a vehicle width direction, and each end portion in the vehicle width direction of which is fixed to the side sill (2) at a position above the floor panel (3);
an outer reinforcement (30) that is fixed to an outer wall portion (13) as an outer wall surface of the side sill (2) in the vehicle width direction, and cooperates with the side sill (2) to form a closed cross section in the closed cross-sectional structure of the side sill (2); and
an inner reinforcement (40, 41, 42) that is fixed to an inner wall portion (23) as an inner wall surface of the side sill (2) in the vehicle width direction in the closed cross-sectional structure of the side sill (2), wherein
the outer reinforcement (30) includes an overlapping portion (33) that is located on an inner side of another portion of the outer reinforcement (30) in the vehicle width direction and configured to overlap the inner reinforcement (40, 41, 42) in an up-down direction or in a side-view, and
the inner reinforcement (40, 41, 42) includes: a first inner reinforcement (41) that has a horizontal surface portion (41a) extending in the vehicle front-rear direction and the vehicle width direction, and an inner end portion of which in the vehicle width direction is fixed to the inner wall portion (23); and a second inner reinforcement (42) that has a vertical surface portion (43) fixed to the horizontal surface portion (41a), an upper wall portion of the side sill (2), and the inner wall portion (23) and extending in the up-down direction and the vehicle width direction.

2. The vehicle lower body structure according to claim 1, wherein
the outer reinforcement (30) is configured to overlap an area where the battery (B) is disposed in the vehicle front-rear direction or in the side-view, and/or
the inner reinforcement (40, 41, 42) is configured to overlap the cross member (60) in the vehicle front-rear direction or in the side-view.

3. The vehicle lower body structure according to claim 1 or 2, wherein
a center of the inner reinforcement (40, 41, 42) in the up-down direction is located above a center of the overlapping portion (33) in the up-down direction.

4. The vehicle lower body structure according to any one of the preceding claims, wherein
the overlapping portion (33) has a surface extending in the vehicle front-rear direction and the up-down direction and/or is configured to overlap the vertical surface portion (43) in the vehicle front-rear direction or in the side-view.

5. The vehicle lower body structure according to any one of the preceding claims, wherein
the vertical surface portion (43) is configured to overlap the cross member (60) in the vehicle front-rear direction or in the side-view.

6. The vehicle lower body structure according to any one of the preceding claims, wherein
the second inner reinforcement (42) has a lateral surface portion (44) extending in the vehicle front-rear direction and the up-down direction from an outer end portion of the vertical surface portion (43) in the vehicle width direction, and
the lateral surface portion (44) is configured to overlap the overlapping portion (33) in the up-down direction or in the side-view.

7. The vehicle lower body structure according to any one of the preceding claims, wherein
the vertical surface portion (43) has a bead (43a) that is inclined upward to an inner side in the vehicle width direction from an outer side in the vehicle width direction.

8. The vehicle lower body structure according to any one of the preceding claims, wherein
the overlapping portion (33) is a surface portion extending in the up-down direction, and
the outer reinforcement (30) further includes: an upper surface portion (31) extending outward in the vehicle width direction toward the outer wall portion (13) from an upper end of the overlapping portion (33); and a lower surface portion (32) extending outward in the vehicle width direction toward the outer wall portion (13) from a lower end of the overlapping portion (33).

9. The vehicle lower body structure according to claim 8, wherein
the overlapping portion (33) is configured to overlap the vertical surface portion (43) in the vehicle front-rear direction or in the side-view, and
the upper surface portion (31) is located at the same position as the floor panel (3) in the up-down direction or in the side-view.

10. The vehicle lower body structure according to claim 8 or 9, wherein
the outer reinforcement (30) further includes:
an upper flange (34) extending upward from an outer end portion of the upper surface portion (31) in the vehicle width direction and fixed to the outer wall portion (13); and
a lower flange (35) extending downward from an outer end portion of the lower surface portion (32) in the vehicle width direction and fixed to the outer wall portion (13),
the lower surface portion (32) is inclined downward to the outer side in the vehicle width direction, and
a corner portion between the lower surface portion (32) and the lower flange (35) has a deformation promoting portion.

11. The vehicle lower body structure according to claim 10, wherein
a corner portion between the upper surface portion (31) and the upper flange (34) does not have a deformation promoting portion.

12. The vehicle lower body structure according to any one of the preceding claims, wherein
material strength of the outer reinforcement (30) is lower than that of the cross member (60), and/or
material strength of the second inner reinforcement (42) is lower than that of the outer reinforcement (30).

13. The vehicle lower body structure according to any one of the preceding claims, wherein the vertical surface portion (43) has one or more through holes (43b).

14. The vehicle lower body structure according to any one of the preceding claims, wherein a center pillar (9) is fixed to an outer panel (10) of the side sill (2).

15. A vehicle (1) comprising the vehicle lower body structure according to any one of the preceding claims.
